# EUROPEAN PATENT APPLICATION

(11) **EP 1 134 652 A1**
(43) Date of publication of application: **19.09.2001**
(21) Application number: 00830052.7
(22) Date of filing: 27.01.2000
(51) Int. Cl.: G06F 7/48

(54) **Dozenal numeration system**

(71) Applicant: DEZI, Pietro, I-00194 Roma (IT)
(72) Inventor: DEZI, Pietro, I-00194 Roma (IT)

(57) **Abstract**

THE CHARACTERISTICS OF THE NUMBERS AND THEIR PRACTICAL APPLICATIONS: 1; 2; 3; 4; 5; 6; 7; 8; 9; ikce 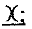 ed 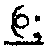 and déz 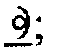 as well as 0 = zero; the 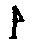 = PINKERLE; and 1 · 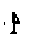 = one pìnk. This numeration constitutes the mathematical system which is applied to all units of measurement, to all apparatus or instruments for survey or measurement with the Pìnkerle programme, including the PC, the callipers, thickness gauges, goniofoot gauges, the compass, the chronometer and the PÌNkerle GEO CLOCK. The projection and the realisation of an innovative and technological procedure based on an order of numerals named pìnkerle, with its particular mathematical outline and system which has the great advantage of permitting the division of any numeral, including 1, into 3; into 6; into 9 precise parts; each time arriving at an exact, precise quotient. The whole of which can be proved in front of your eyes, because of the undeniable verification shown by the Tridionic Equation. **Any segment of line,** in positive represent one value equals to one! Every foot represent 12 ^{TWELVE INCHES,} = 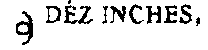 and 144 ^{LINES,} = 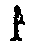 pìnk lines. Each and every year equals, in positive, one foot and 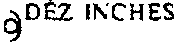 = 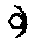 déz hours. Every hour contain 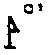 pink prime/minute, = 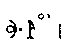 DÉZ PÌNK MIN/SEC, = 1 · 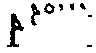 Pìnkpìnk min/third; = 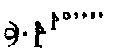 déz Pìnkpìnk min/fourth and so on.

Every graduated circle in conformity with the unit of measurement contain 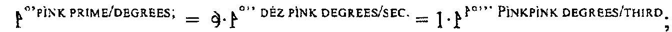 etc.

The physical, mathematical and geometrical proof is of 9 on the □; as it is indeed for square on the polygon and the circle. Thus a number *n* of perfect geometrical figures can be made, with any segment of a straight line and conforming to the values of the units measurement. The outline of the figures always corresponds to the very same segment 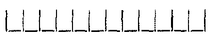 of line.

The unit of measurement will be numbered to conform to the notion of SPACE/TIME; because bringing together the two extremes of the unit of measurement automatically produces a circle graduated in 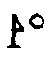 = pìnk degrees. It is in this way that the foot becomes the controller or moderator of measurement in both SPACE-TIME and GEOMETRY, including ω.

MAIN CHARACTERISTICS OF NUMBERS AND PRACTICAL APPLICATIONS. 1; 2; 3; 4; 5; 6; 7; 8; 9; ikce 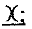 ed 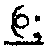 and déz 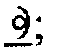 as well 0 = zero; and 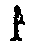 = pìnkerle; and one pìnk = 1· 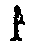 .

Since SPACE-TIME AND GEOMETRY are inter-related and always syntonized, numbers and the mathematical system can be applied to all measurement units, survey and observation pìnkerle instruments, gauging and PÌNKERLE programmes, including the caliber, the comparing goniometer, the compass, the chronometer as well as the clock. Hence, in all operational fields, owing to the irrefutable evidence of TRIDIONEC EQUATION.

## Description

### DOZENAL NUMERATION SYSTEM: INTRODUCTION.

### ACHIEVEMENT OF A NEW TECHNOLOGICAL PROCESS, WELL FOUNDED ON A DOZENAL NUMERATION ORDER, WITH ITS RELEVANT SCHEME AND MATHEMATICAL SYSTEM.

In this scheme a base formed of twelve different UNITARY NUMBERS is introduced: 1; 2; 3; 4; 5; 6; 7; 8; 9; ikce 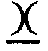 ; ed 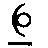 ; and déz 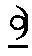 ; as well as 0 zero, and 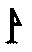 = pìnkerle; = one pìnk 1· 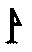 . With the above cardinal numbers, 0 has a twofold function, as 0 and as a fixed support. On the other hand Pìnkerle, equal to 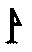 , has a threefold function: it is a figure, a cardinal number and amobile support. Therefore:
1^{st} The whole number 1, as well as any other figure can be divided by 3, by 6 and by 9 always giving an exact quotient.
2^{nd} The measurement unit conforms with the idea of SPACE-TIME and that is because SPACE-TIME and GEOMETRY are always in syntony.
3^{rd} Any measurement unit determines and attributes a real value to all the quantities that are the object of measuring. Thus, the measurement unit called foot, divided into 144, a hundred forty-four lines,constitutes when joined in the form of a circle, the goniometer graded in 1. 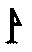 °' pìnk' degrees. With the same graded goniometer a compass for taking bearings and navigation can be constructed. The clock, already corresponding to twelve hours, is directly related with the SAME REFERENCES as marked by each of the twelve inches forming the foot. It follows, that each *line* of the foot, representing each degree of the goniometer, is also, in clock terms, a minute of each hour.
4^{th} With a straight line segment, in conformity with the values expressed by the unit, a number n of perfect geometrical figures can be made, and the contour line of figures always corresponds to the value |_|_|_|_|_|_| of the given segment.
5th Mathematical demonstration and casting out the nines on a square; as is already shown in the new PYTHAGOREAN TABLES
6^{th} Demonstration of the THEOREM OF PYTHAGORAS on the sequence of the consecutive numbers 3; 4; and 5; as with consecutive numbers 7; 8; and 9... in the positive as well in the negative sense.
7^{th} Mathematical demonstration and specific evidence of the concept relating to the physical characteristics of matter, as well as the role and functions of anti-matter.
8^{th} Pursuing the practical application of this system, we can make a STANDARD MECHANISM that can be used for mathematical calculi; forrecurring measurements related to SPACE-TIME and GEOMETRY; as well making and using the new compasses, useful, for taking bearings and navigating, including standard apparata for AUTOMATIC PILOTING which can be integrated with INERTIAL NAVIGATION IN AVIONICS.
9^{th} It is possible to design a new telecommunication system, suitably adapted to standard mechanisms, through which we can operate, communicate and broadcast in a more dynamic fashion. Perhaps, also, we may discover the location of the first key giving access to communicate and to hold a dialogue with the major entities. Entities which already Physically exist and are functioning or, in any case, are present in the infinity of SPACE.

### DOZENAL NUMERATION SYSTEM: DECIMALS FIGURES BY DENOMINATION. (TABLE N° 1 ).

### DOZENAL NUMERATION SYSTEM: BASIC UNITARY NUMBERS. (TABLE N° 2 ).

### DOZENAL NUMERATION SYSTEM: BASIC UNITARY NUMBERS.

The number « 1 » is the active*REPRESENTATIVE of each DIMENSION, each entity, just like each Point 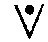 ! The number one is the start point for every numerical base and the prime referent of numerical knowledge. For antonomasia, the number one is potentially a genuine Point 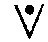 , point *vu* the usual old Point 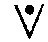 . A Point 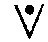 which, associated with the numerical value of 1 expresses an integer. The number 1 is also attributed to the *Original* Point *vu* = >·<. The identifying sign which should always precede this Original >·< Point is always preceded by the minus sign that is > - < . Then the number 1, the very SAME NORMAL 1, is attributed to the virtual point and thus to all sorts of facts and arguments.

### DOZENAL NUMERATION SYSTEM NAMES OF DOZENAL NUMBERS AND FIGURES AND TABLE OF DOZENAL NUMBERS AND FIGURES. (TABLE N° 3, and TABLE N° 3 A ).

### DOZENAL NUMERATION SYSTEM COMPARATIVE TABLE OF THE NUMERALS OF THE DECIMAL SYSTEM WITH THE NOMENCLATURE FOR THE DOZENAL SYSTEM IN PARALLEL. ( TABLE N° 4 )

### DOZENAL NUMERATION SYSTEM: NEW PYTHAGOREAN TABLE and... Checking nines off on a square. ( TABLE N° 5 )

### DOZENAL NUMERATION SYSTEM:

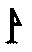 **PÌNKERLE - POINT** 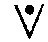 **Pìnkerle =** 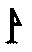 **= 1·** 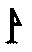 **!**

A graphic symbol newly developed and adopted as representing the actual numerical value corresponding to the square of 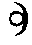 . That is to say Déz □ equals twelve □ . Exactly as shown here → 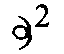 equals twelve². And at the same time that << 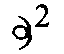 is one pink >> as well as 1· 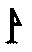 is □ of déz.

The symbol 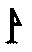 ^{= Pinkerle} is allocated to each successive numerical value after déz²; in the same way, as with the elevation to the power of the same 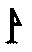 . That is: 1· 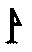 times 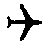 □→ equals 1· 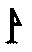 ^{□} ; and is the same as saying Pìnk to the power of itself that is 1*PÌNKPÌNKS. Whether dealing with a square □ or with a circle graduated metrically in the same way as it accurs with a Band or Strip printed to represent One Foot equals One Hour = One Foot subdivided into x Pìnk Lines which in turn correspond to those same Minutes which are contained in each and every HOUR.

Thus we have 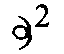 *n* = a 12² *n* << twelve □ *n* >> always in a direct relationship with an ungraded Circle or a graded one containing those same minutes that one by one roll by, one after another !!! Therefore 1· 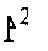 *n*, as one hundred and forty-four 144² *n...* Are always in a direct relationship even when dealing with a Segment connected to a □, Similarly with a graded Circle. In fact precisely thus as explained earlier in the preamble for Pìnkerle*Point* 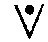 We ourselves have accorded the priority to operations employing Dozenal*Numeration. A basis on which it has been possible to construct the WHOLE MATHEMATICAL SYSTEM HERE DISPLAYED.

### DOZENAL NUMERATION SYSTEM: THE ADDITION.

Representative series of decimal numbering system and representative series of dozenal numbering system.
(TABLE N° 6 )

### DOZENAL NUMERATION SYSTEM THE MULTIPLICATION

### The indicated method of rapid multiplication.

Here below are given series of numbers for multiplication, and opposite the relative multiplicators: each of these numbers are for use in multiplication. Of course every operation will have an identical result. The technique for rapid multiplication is as follows: divide the MULTIPLICAND by two until you arrive at One; while it is compulsory to register the quotient which is obtained in every subdivision. Then you use the multiplyer, multiplying by two, in the succession of numbers. But the numbers belong to two different SYSTEMS and so they are intrinsically DIFFERENT.

Example: Numerical series representative of decimal numbering system numerical series representative of dozenal numbering system. Now, by using the underlining, we are able to cancel the various even numbers, showed in italic type, obtained by the division. Meanwhile, with the same line we eliminate numerals obtained by the operation on the multiplicator.
( TABLE N° 7 )

DOZENAL NUMERATION SYSTEM: PROGRESSIVE ADDITION NUMBERS and figures. A scheme for progressive addition originally elaborated by Leonardo Pisano, or rather Leonardo FIBONACCI known as Pisano is here reproposed. Pisano succeded in understanding the varied functions of the widely known DECIMAL numerical system through his comprehension, of the world of Arab commerce and culture. Then, as early as 1202 AD he was the first man to enumerate it in the West. The scheme elaborated by the above quoted Leonardo FIBONACCI foresaw that every number or figure arrived at by addition, beginning with zero, always adds up to the same total as the number or figure which immediately precedes it.
( TABLE N° 8 ) ( TABLE N° 8 A ).

### DOZENAL NUMERATION SYSTEM: ONE, CARDINAL UNITARY NUMBER as 1! ( TABLE N° 9 ).

### DOZENAL NUMERATION SYSTEM: G E O M E T R Y.

### THE FOOT IS THE OPERATIVELY PREPARED UNIT OF MEASUREMENT. THE FOOT: WHILE WAITING FOR THE OFFICIAL ACCEPTANCE OF THE METRE/PÌNKERLE IN ITS FUNCTIONS AS A GONIOMETER PROTRACTOR, AS A CHRONOGRAPH, AS A TECHNOGRAPH AND AS A GAUGE, THE FOOT COMPLIES WITH ALL THE FUNCTIONS REGARDING MEASUREMENT INCLUDING GEOMETRY.

Driven by these innovations:

The term is based on two substantial elements: the EARTH- GEA and the metron measuring =geometry. GEOMETRY, as a matter of study, is in conformity with its main basic aspects: the operational means NUMBERS as well as the plane, the straight line and the graded circle. Using the dozenal numbering and following the numerical base in a linear sense we can cover the whole measurement unit. Thus, the latter is physically determined in any form it takes.

Taking into account the constant syntony of SPACE-TIME AND GEOMETRY then as the dozenal numbering system is available for the continuing application of the dozenal numerals, the unit of measurement, the foot, con be utilized as a final gauge. Then, too, with the same unit of measurement, an infinite quantity of geometrical figures can be constructed, all of differing shapes but with the same Point 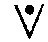 content. This is the reason why many mechanism the MATHEMATICALLY PRECISE PÌNKERLE*PUNTO* 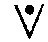 SYSTEM applied to the geometric figures, geometrically conforms at the outset and is constructed according to the dictates of the effective value represented only by the foot. This is until the METRE-PÌNKERLE is legalized. The value conforms to the indications given by the units of measurement, among which thePROTOTYPE*PÌNKOMETRE can carry out all the representative functions, and which is anticipated by the PÌNK-FOOT. Meanwhile the extremities of these same quoted measurement units can be joined up in the shape of a circle, which then becomes the << ARBITER >> OF THE*GRADUATION SCALE. Therefore the grading, already conforming with the measurement unit, finds itself coinciding with the subdivisions carried out on the straight segment which represents the measurement unit, the foot, under consideration, the subdivisions being in 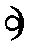 inches and pìnk lines, which automatically constitute a standard GONIO-FOOT. Then in the Time Space, whether the measurement concerns a Square, or the representation of a circular circle, wherever they are applied, the graduated circle with its déz inches = 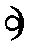 inches, one hundred and fortyfour lines = 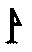 lines becomes really legal.

In this context all the instruments needed are defined and obtained. So all that was foreseen in the main programme is in conformity with the segments of that straight line which represents a foot. Just because they include inches and pìnk lines. At the same time all conforms to the previously established indications with the measurement unit the foot and is confirmed by it by virtue of the relationship with 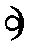 hours...

In this way a GRADED*CÌRCLE can be redefined as conforming with the PÌNKERLE-CLOCK. THE PÌNK CLOCK = 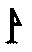 -CLOCK, in turn, is in permanent relationship with pìnk°degrees and 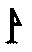 lines. Indeed the PROTOTYPE*PÌNKOMETRE defines the precise graduations even for a COMPASS, a protractor, a technograph and a clock 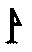 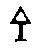 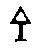 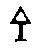 While, as herein represented, everything in geometry can be measured in pìnk°, and is confirmed by the qualifying symbol: |/°' = degrees and pìnk minutes, either for angles of 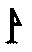 °' or pìnk |/°' prime degrees and prime minutes.
(TABLE N° 10 )

### DOZENAL NUMERATION SYSTEM: THE SEQUENCE OF THE MINUTES.

Taken as a whole; 1: 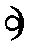 = 1/ 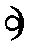 it follows that a 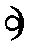 dezimes of a meter = 0,1 meter. The same can be said for the foot: a foot divided by déz gives 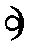 inches of a foot = 0,1 feet. Again let us say for the dézth share of each hour of the day which gives déz prime/minutes, as well as for the déz |/°' prime/degrees of every circle divided into pìnk°' prime degrees = 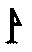 °'! A whole 1: 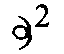 = 1/ 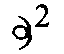 gives a 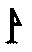 portion. That is to say 1· 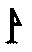 minute parts of each whole NUMBER = a pìnk pìnkerlimeters of the whole meter; also pìnk lines of the whole foot; and equals to 1· 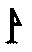 ∼ of semiwaves; = to 6 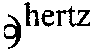 and sixdoz ^{pulsations} ω.

One pìnk of prime\minutes' = 1· 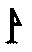 °' prime/degrees of any circle or graded circle, all corresponding to 6 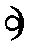 ω; and to 6 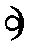 hertz, for any time..
( TABLE N° 11 )

DOZENAL NUMERATION SYSTEM: This π, according to PIERO MEZIO. ( TABLE N° 12 )

DOZENAL NUMERATION SYSTEM: NUMBER OF ω PHYSICAL PULSATIONS RELATIVE TO PHYSICAL TIME. DETERMINED BY CESIO 133, in each hour.

THIS RESULTS FROM THE PROGRESSIVE MULTIPLICATION OF TWELVE BY 12; AND DÉZ BY 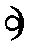 ; AND THESE, IN TURN, RESULT FROM THE SUCCESSIVE ADDITION, IN ACCORDANCE WITH THE SCHEME ELABORATED BY LEONARDO FIBONACCI.

These figures represent the exact number of physical pulsations produced by cesio 133 = Cs 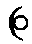 1; ω emission effected in each hour of every day, to constant rhythms. (errors and omissions excepted [EOE]).

As well 33,093,474,372,000,00 ω corresponds to3·86·58,· 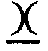 1·73·76· 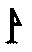 0.00 ω
(TABLE N° 13 )

### DOZENAL NUMERATION SYSTEM: V I D E O S Y N C H R A T H R Y.

*The...Facts:* For every AVERAGE SOLAR DAY that includes six thousand-four hundred sec/minutes and <<86,400">> also seen from the point of view of a reference to physical time. All this springs from a base established in a random selected place or point on the Earth... Of course looking to fixed points in Space for the sole purpose of taking them as sighting... Targets.

While this is going on, Cs 133 = Cs 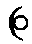 1 completes 794,243,384,928,000 ω at a constant rate. That is to say there are seven hundred and ninety four Billions, two hundred and forty three thousand and three hundred and eighty-four Millions, nine hundred and twenty eight thousand ω at a constant rate. With this number or figure of ω, the physical time duration of every complete day can now be calculated. That is to say that seven hundred and ninty-four Billions, two hundred and forty-three thousand and three hundred and eighty-four Millions, nine hundred and twenty-eight thousand ω at constant rate. This is the figure that should be quoted in the EURO*USA legalisation proceedings.

Therefore, with the same rhythm of radiations quoted as being normal PHYSICAL ω, there are always the same quantities of ω for every min/sec that passes. That is 9,192,631,770.00 ω. In script nine thousand one hundred and ninety two Millions, six hundred and thirty one thousand, seven hundred and seventy irradiations or normal effective phisycal pulsation for ω each 60^{th} min/second.
( TABLE N° 14 )

NOTE: The Min / prime, the min / second, the min / third and the min / forth ( 60^{th} ) here represented, can be arrived at by the subdivision of each hour that passes. This always with reference to the decimal order of numbers. While, as shown above, the successive min /fifth can not be precisely quantified. Therefore taking the ceaseless and constant activity of Cs 133 = Cs 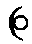 1, which continuously emits ω, the time covered by the min / fifth is untranscribable. So this min / fifth remains indefinable, despite the constant rhythm, and the unchanging exactitude of the ω for min / sec. compared to the figure of 9,192,631,770.00 ω for each min / second. Also taking into account that the figure given is divisible by **3; by 5; and by 7**.

At this point, making use of the DOZENAL SYSTEM OF NUMBERS, it is possible to operate as well in the reality of the succession of minutes, as on the rhythmic coincidence of radiations. Establishing as a base, that the number of effective ω, corresponds with every hour. As an example: number 133 corresponds to the dozenal number << 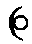 1 >> which equals eddéz-one, thus establishing that the denomination of Cs 133 translates into << Cs 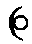 1 >> or Caesium eddéz-one. Therefore since, this figure Cs 133 of the decimal numerical order is in function of Caesium 133, it is demonstrated that figure... Cs 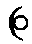 1 of the dozenal numerical order is in turn in function of the same Caesium 133 Cs 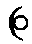 1.

### DOZENAL NUMERATION SYSTEM: Consequently. (TABLE N° 15 )

In fact, if we put as a basis of our calculation the relationship existing with the numbers of periods or radiations of said Caesium eddéz-one equal Cs 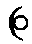 1; = Cs 133... We can see the natural sintony. While the development of hours, as well as of the relative minutes, always coincide. The mathematical advantage this brings to the tecnique is the quantification of the periods of transition of the chosen quartz crystal arts the relative Pìnk minutes always exact. From the first pìnk minute' 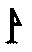 , to min" 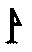 , to min'" 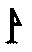 , to min"" 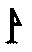 , to min'"" 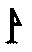 , to min""" 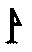 , etc, with no limits for the following minutes 7°; 8°; 9°; 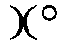 ; 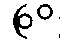 ; e 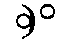 since the calculation can be based on an already defined figure. That is to say you carry on, in effect, with the measurement of time in coincidence with a number of periods, as with the fractions of a single period, but mathematically exactly. We can measure a period peculiar to the selected quartz or a determinable portion of a single period for any element which can produce said ω at a constant rythm. And this is because we are dealing with an identical portion of cycle or period corresponding to < LESS one ω, or with a time < SHORTER than a single period, considered as irradiation or ω.

### DOZENAL NUMERATION SYSTEM: PRIMARY E L E M E N T S OF R E A L I T Y (TABLE N° 16 )

DOZENAL NUMERATION SYSTEM: POINT 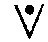 = Point *vu;* and Point >·< = Original Point *vu*:

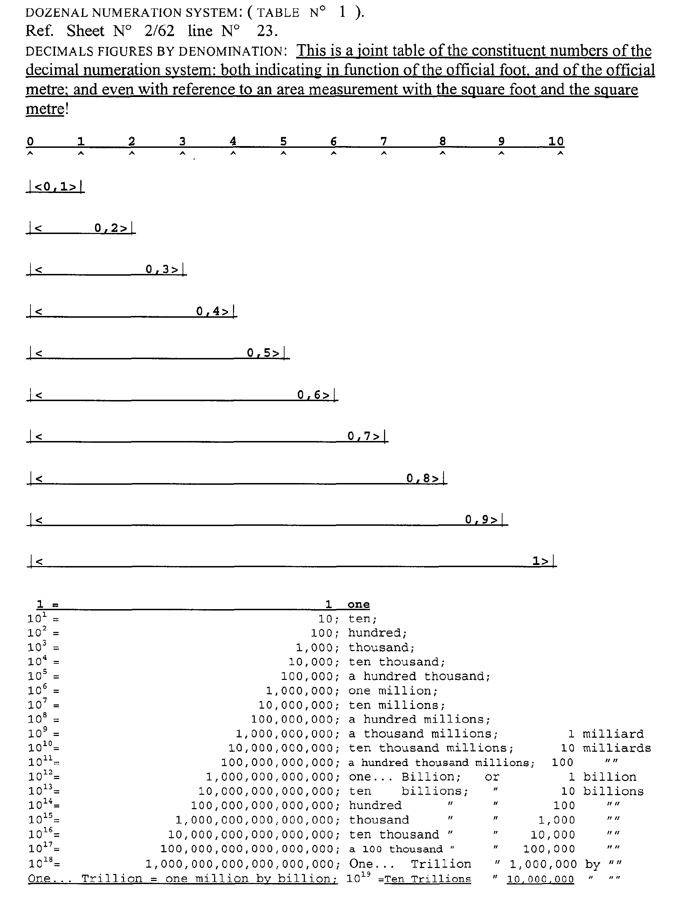

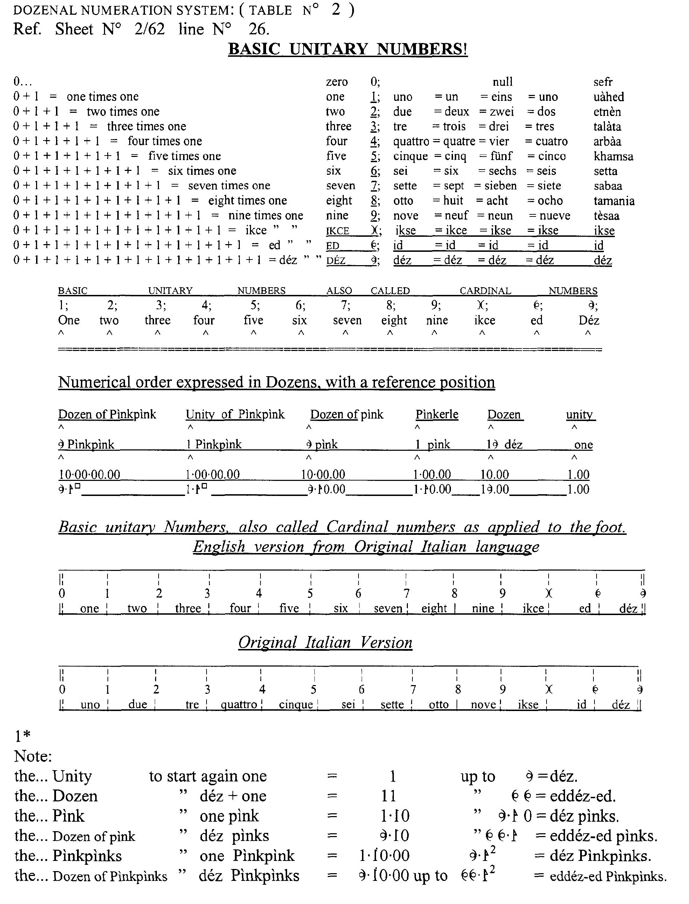

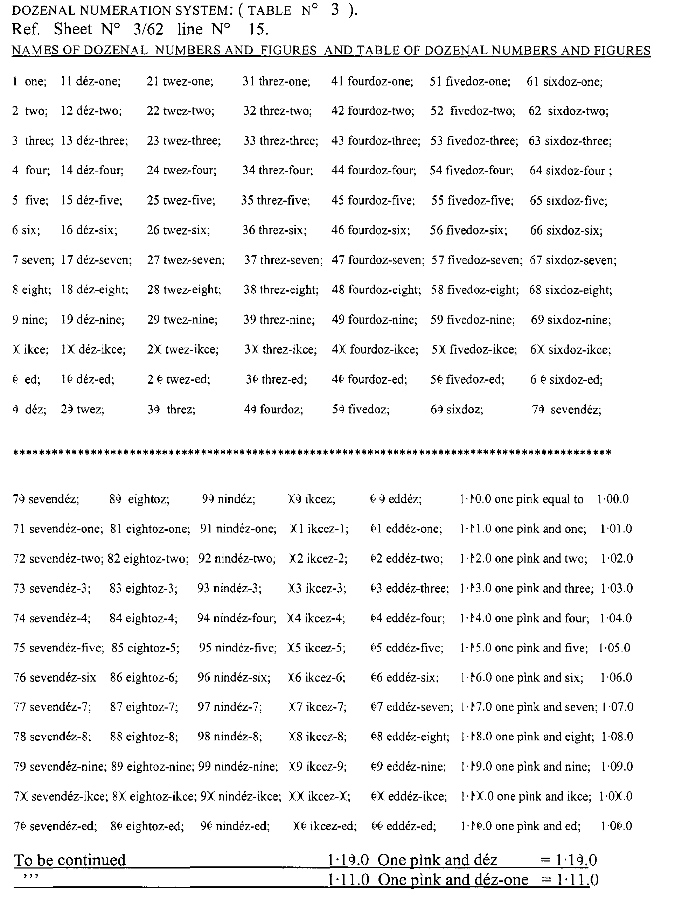

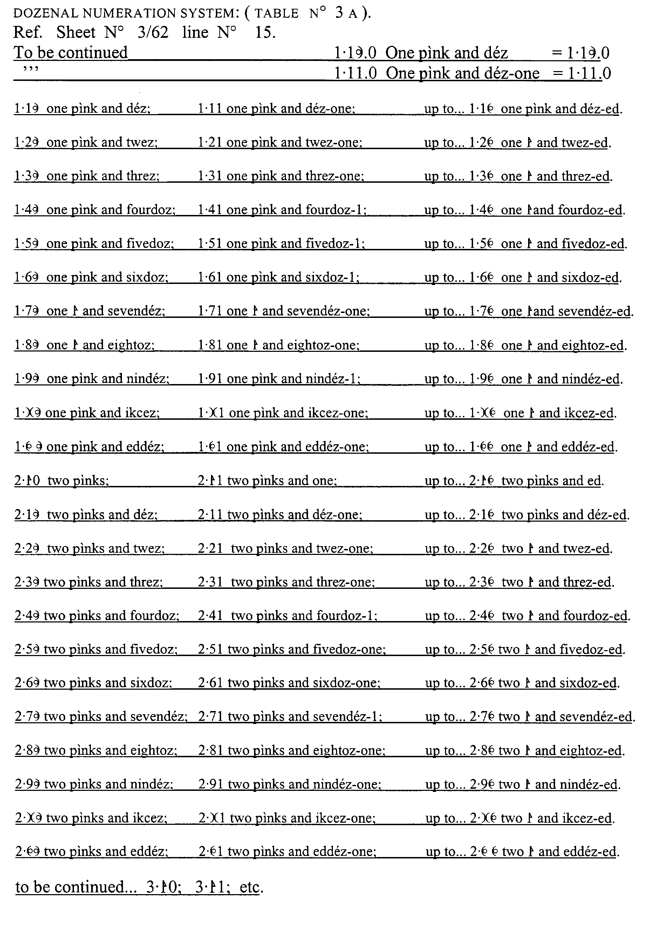

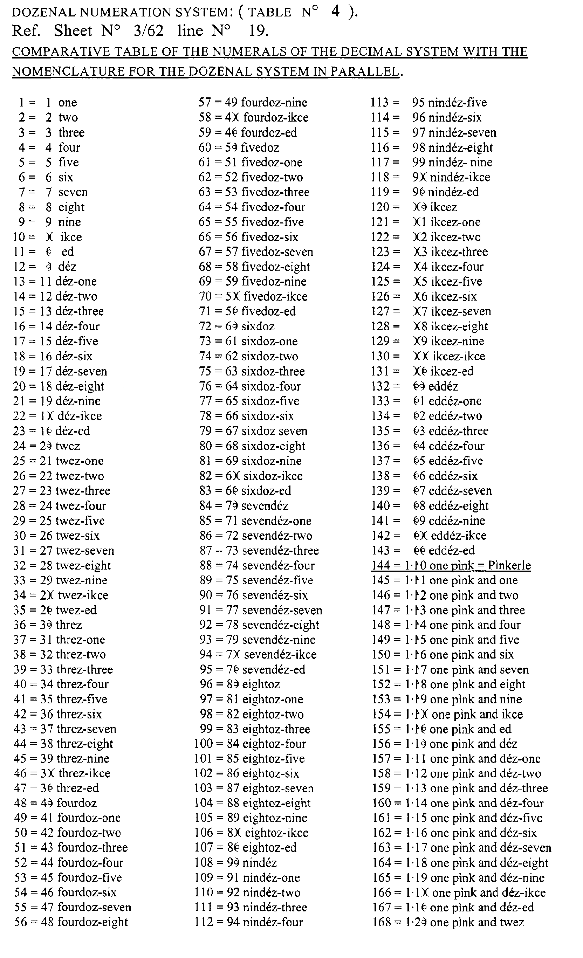

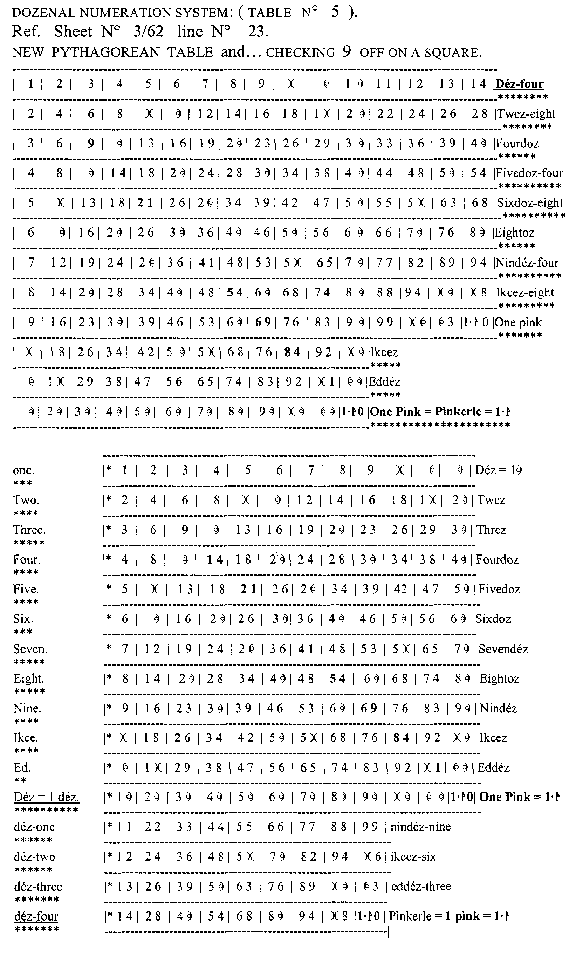

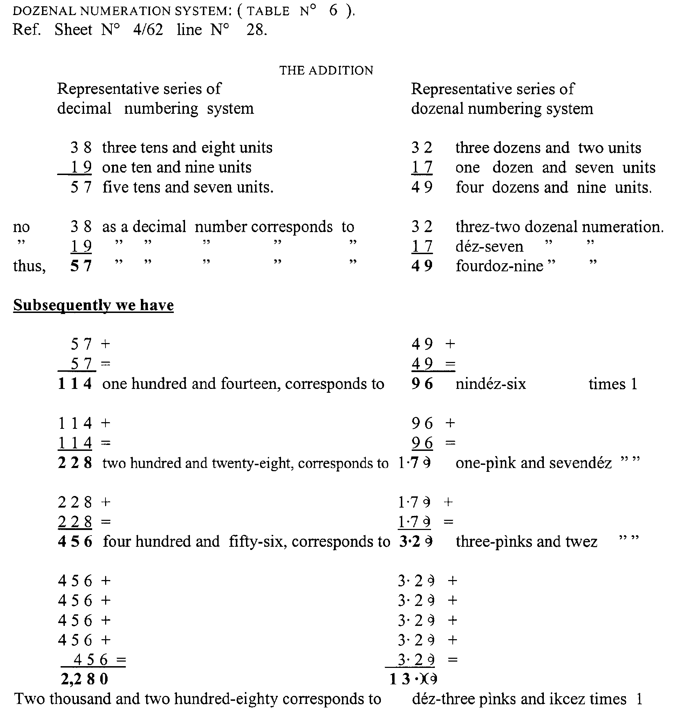

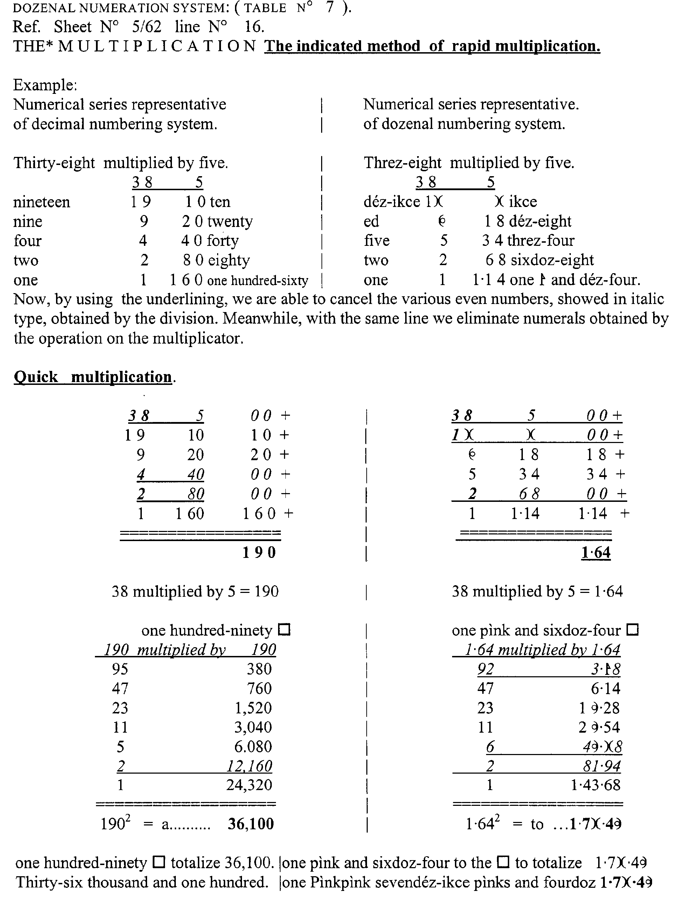

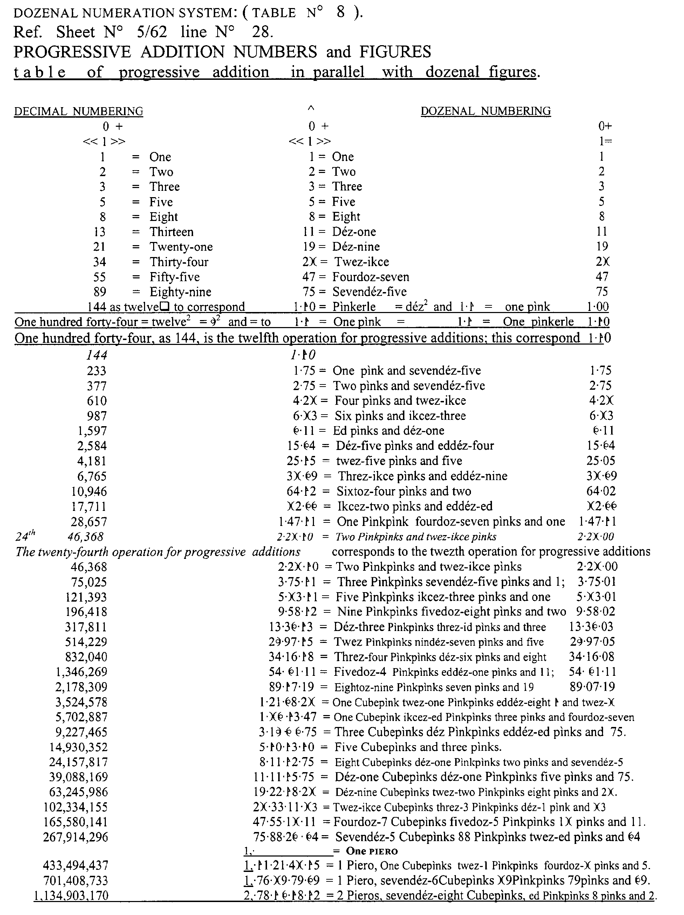

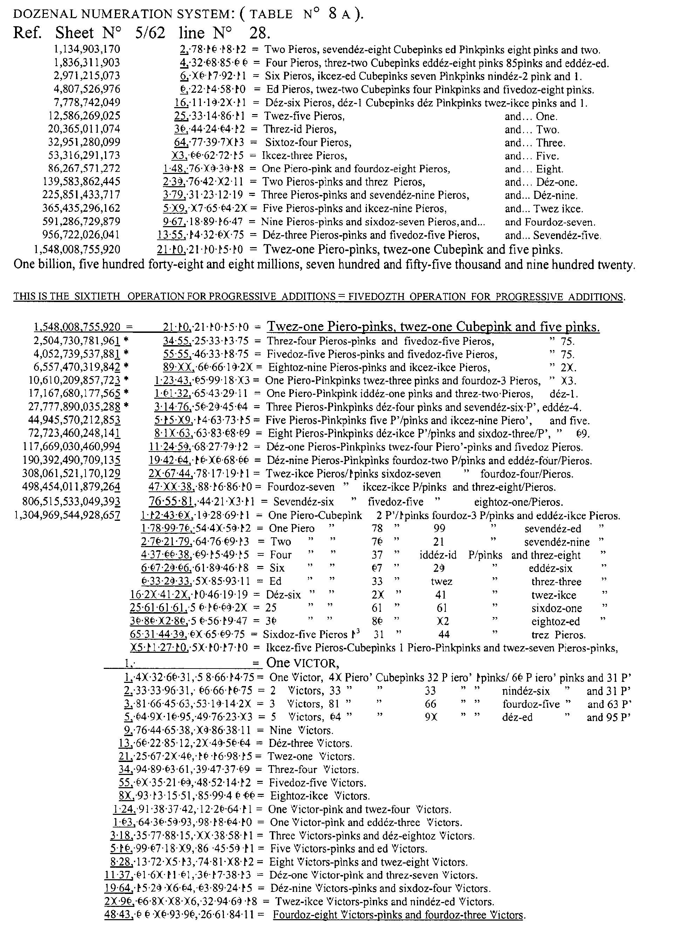

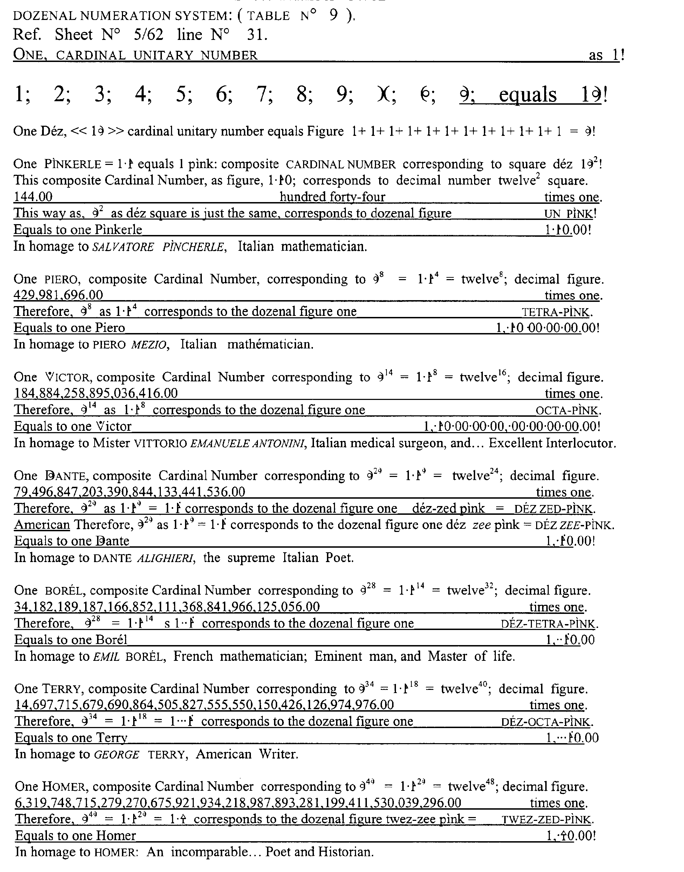

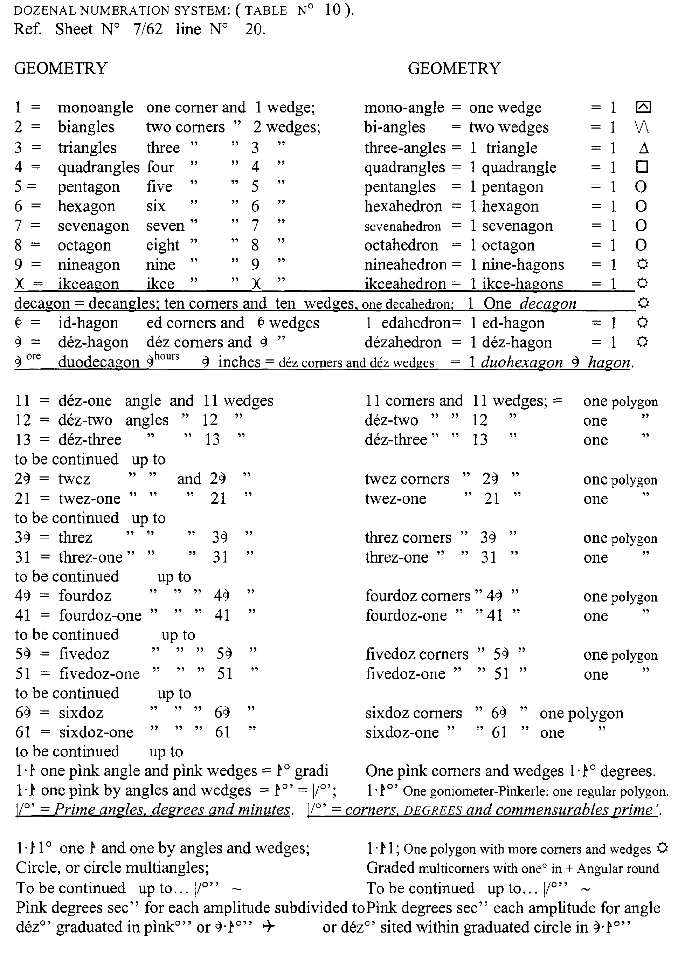

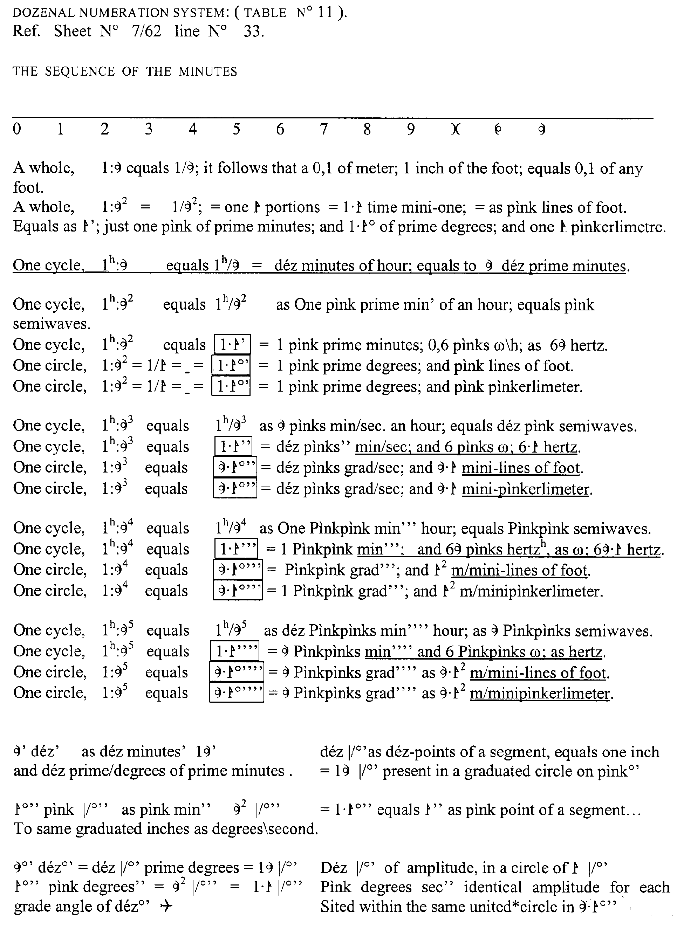

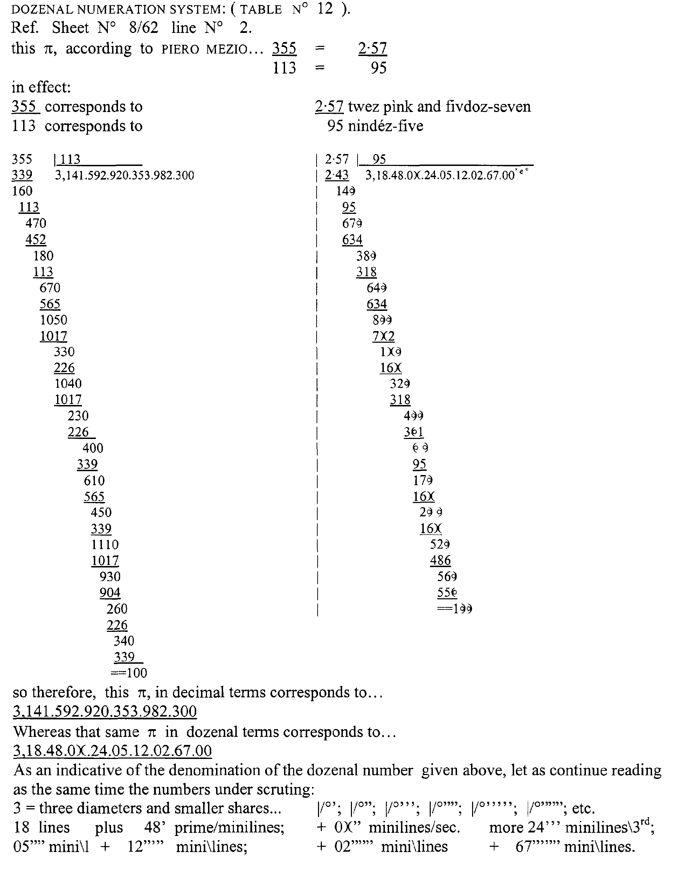

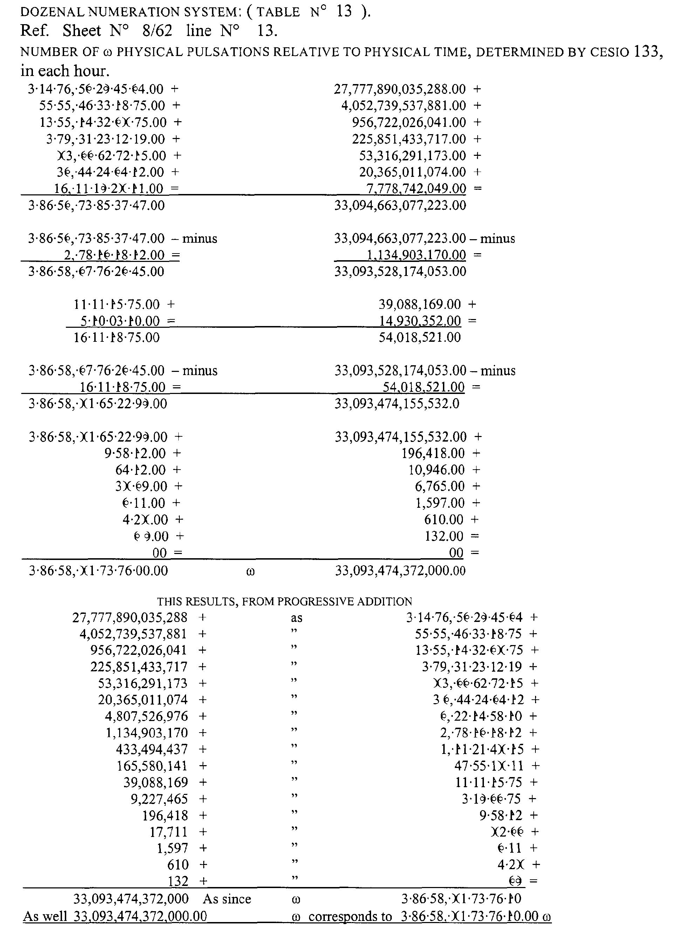

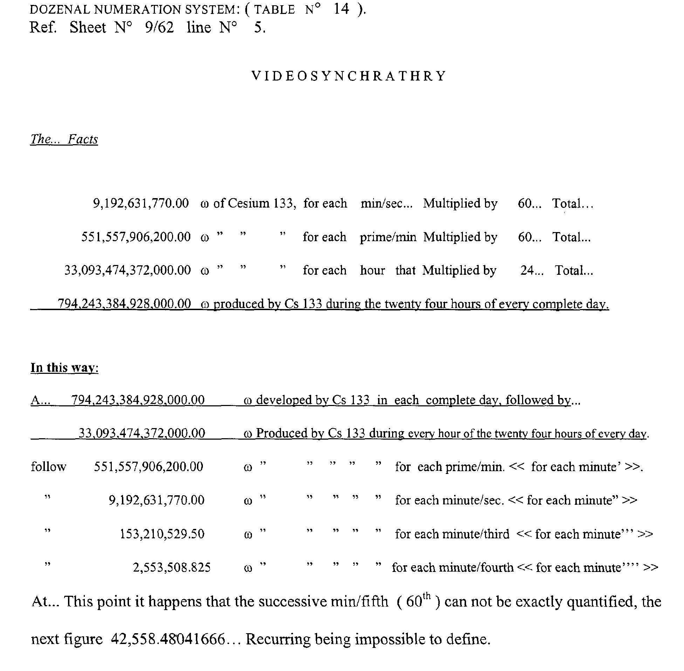

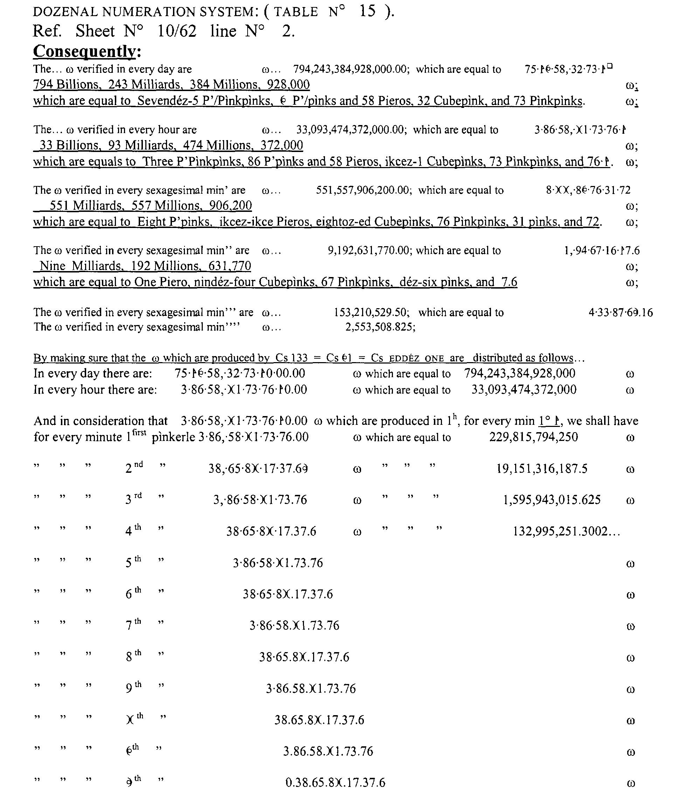

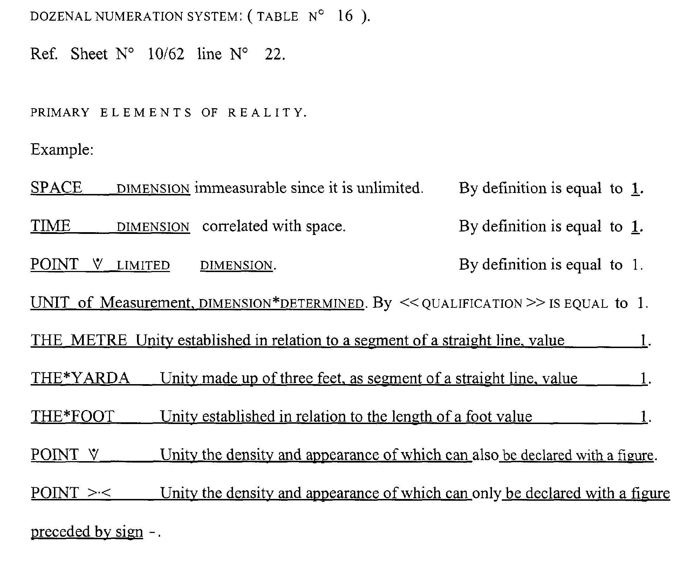

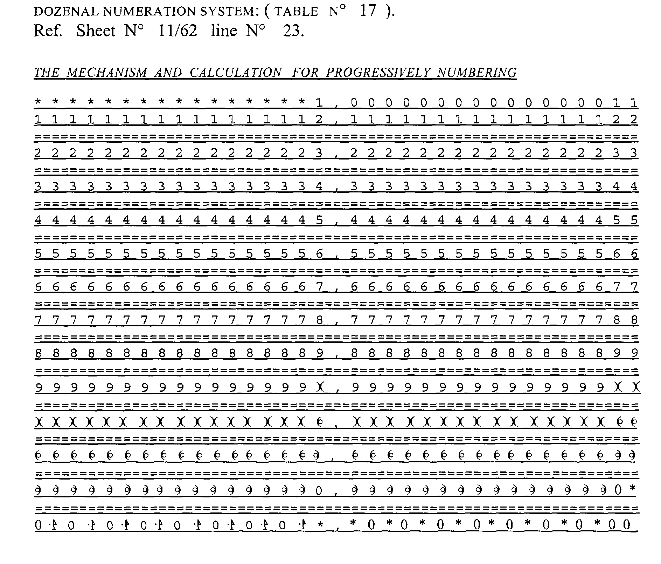

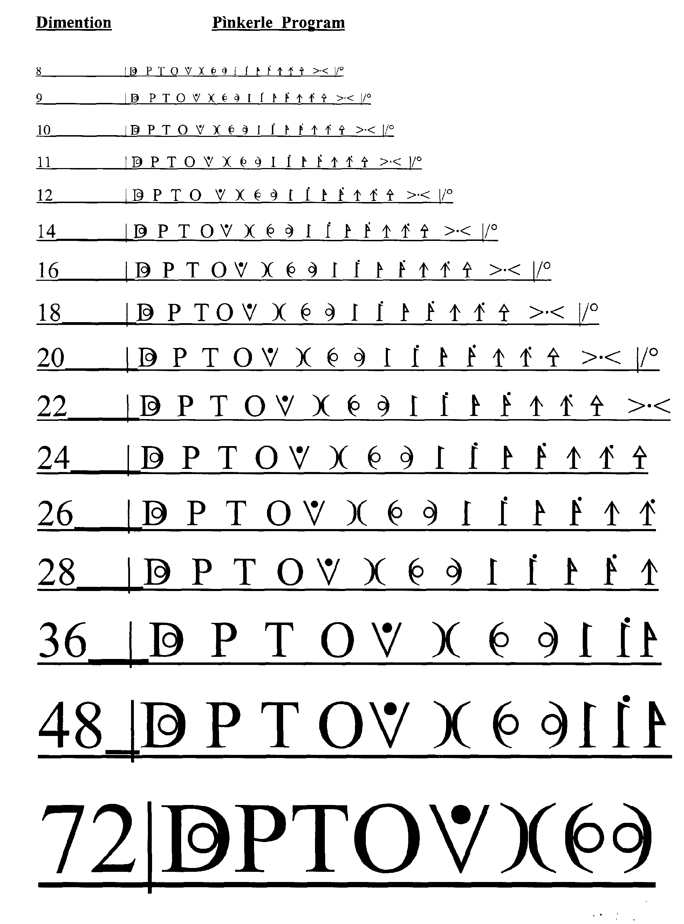

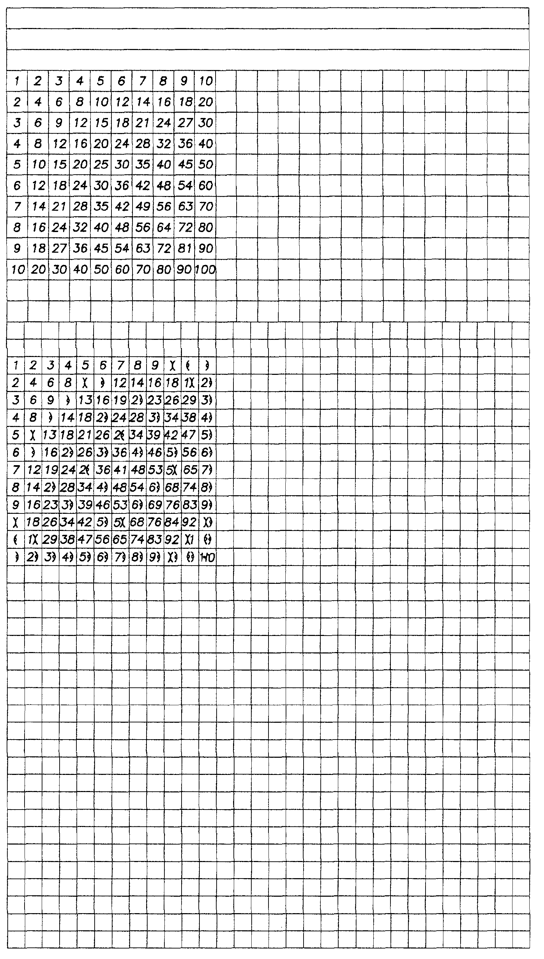

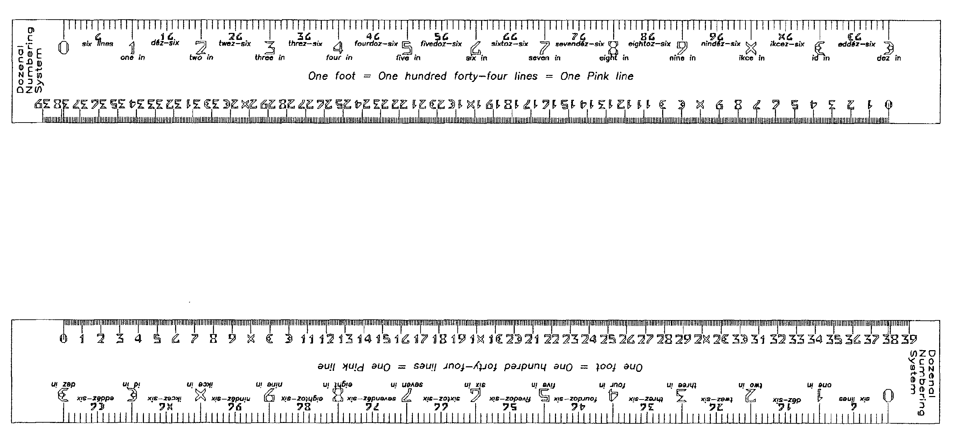

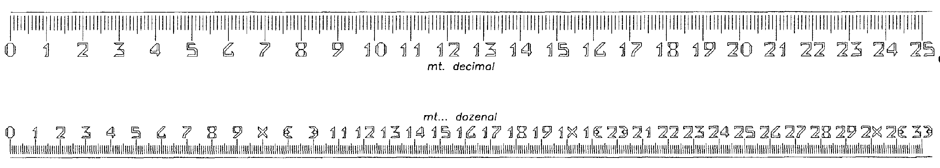

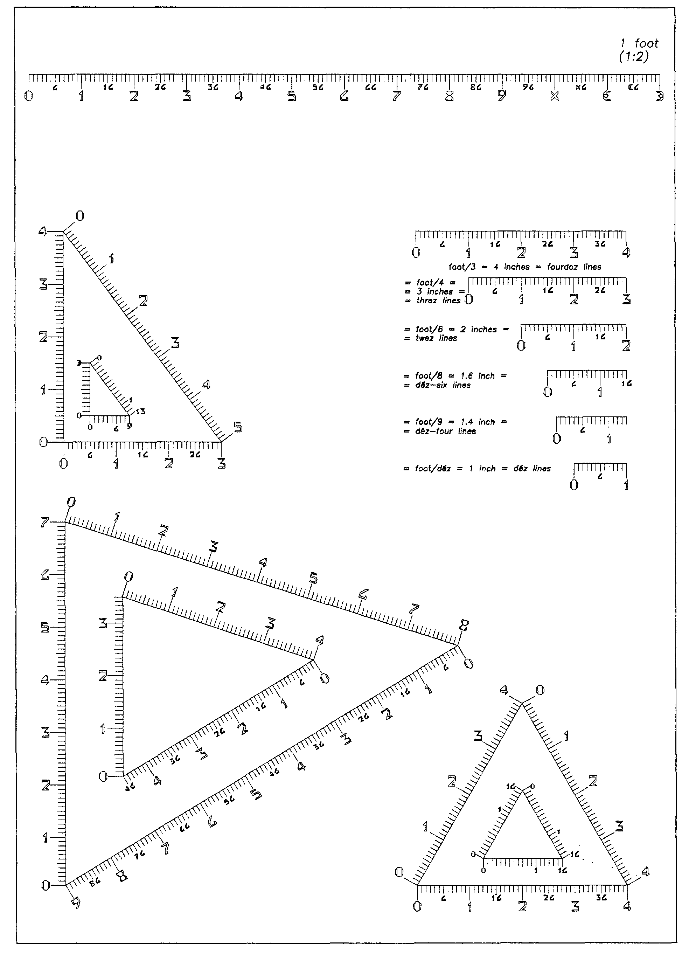

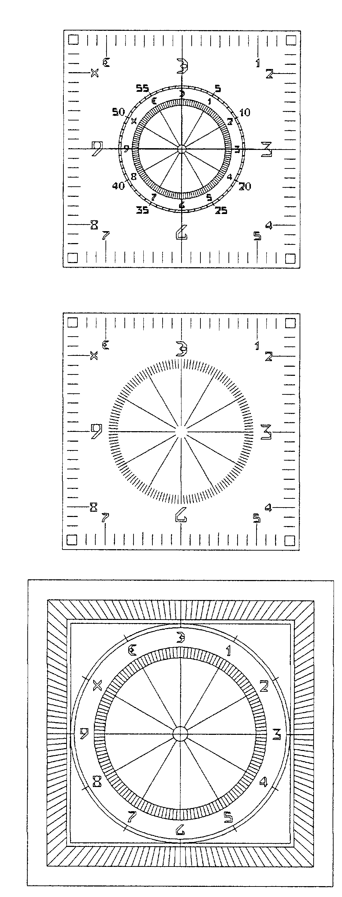

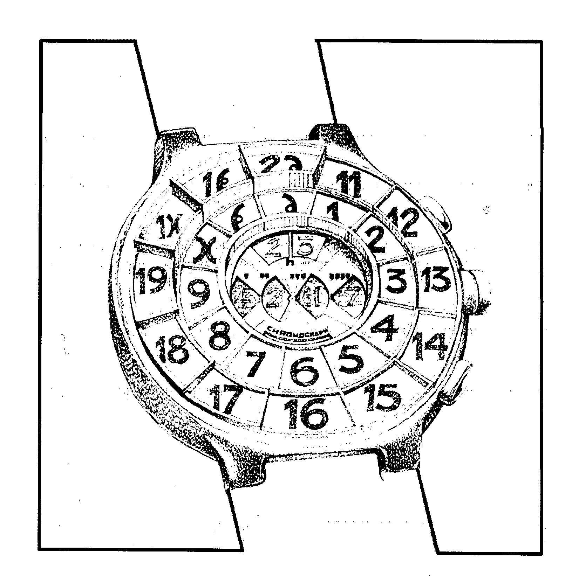

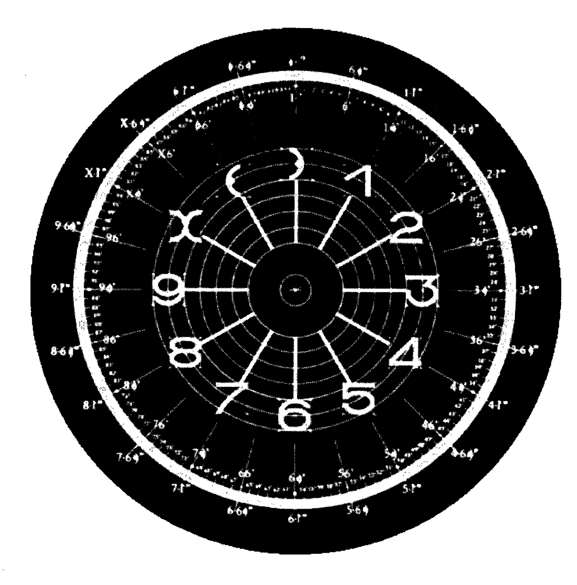

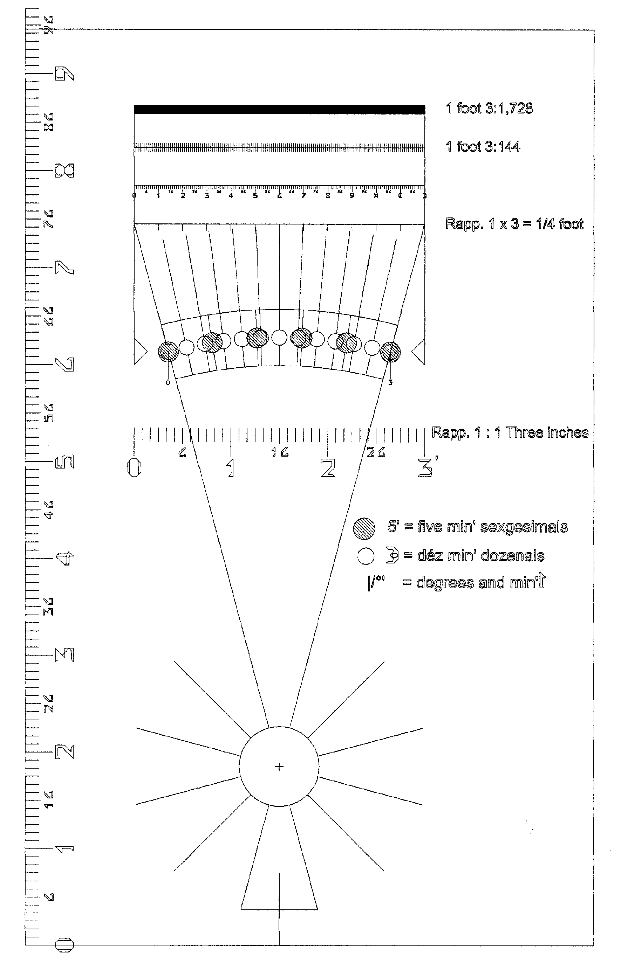

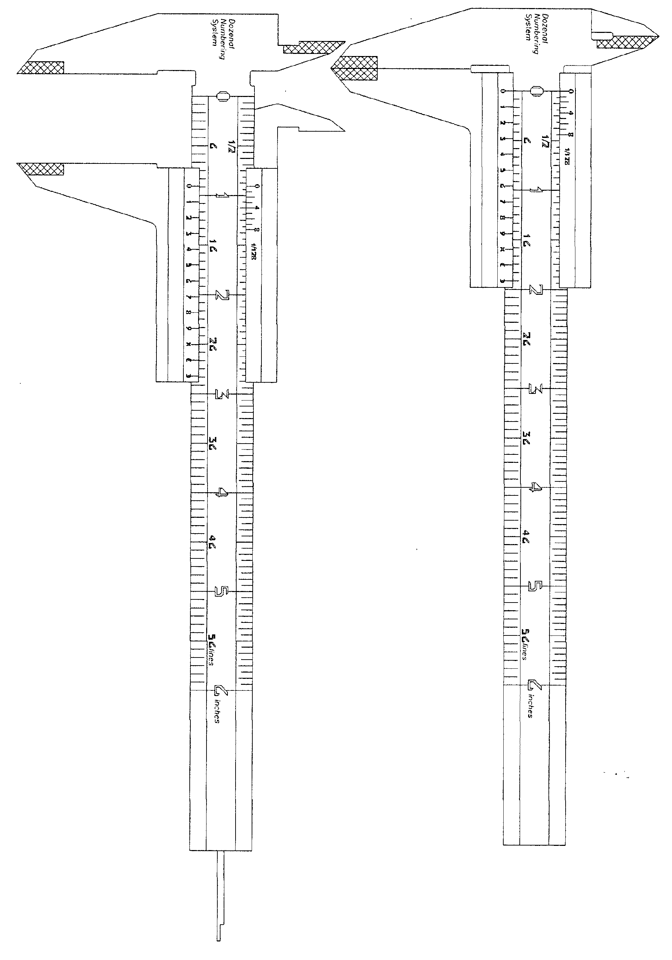

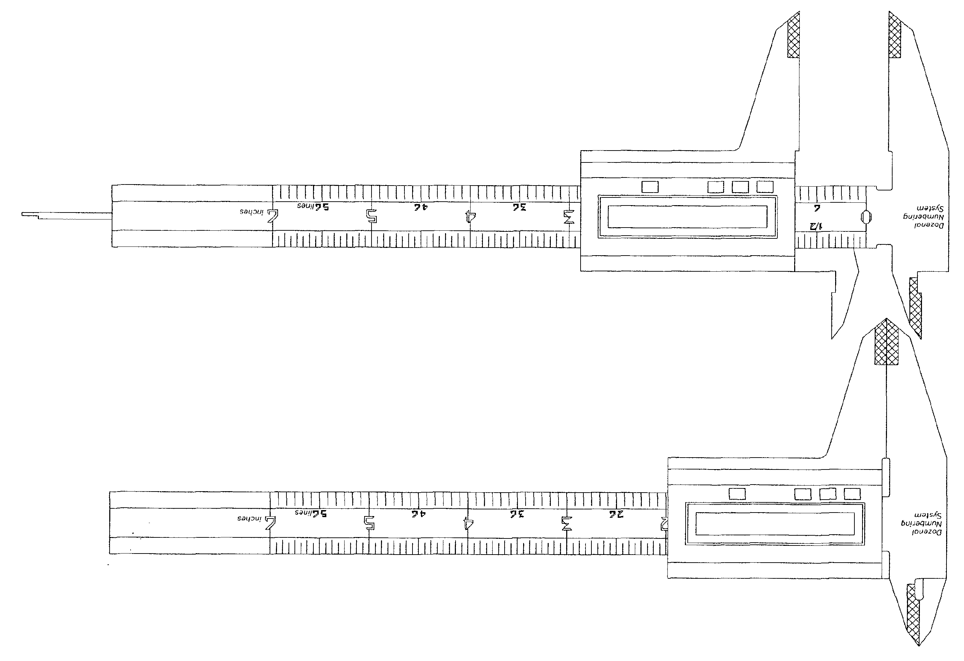

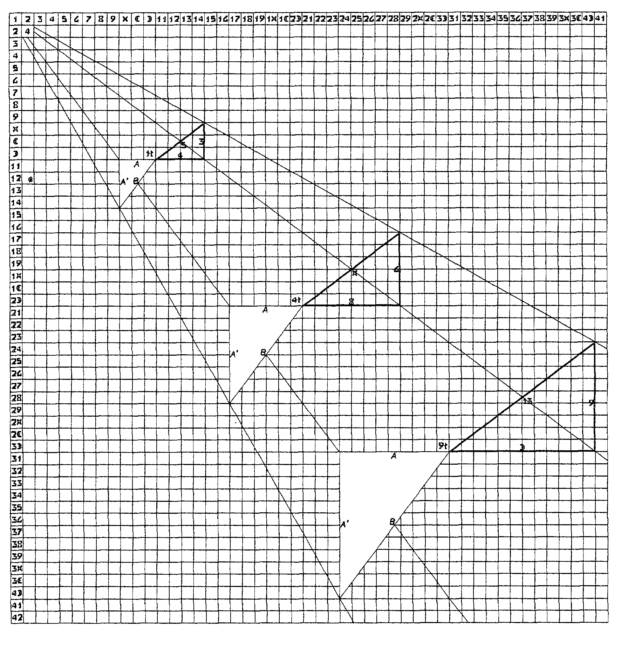

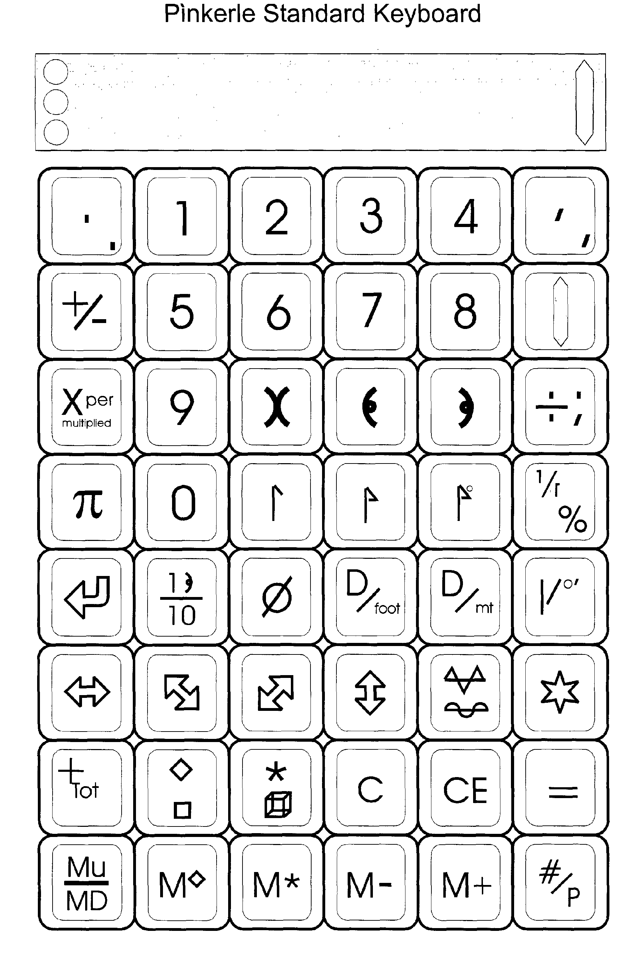

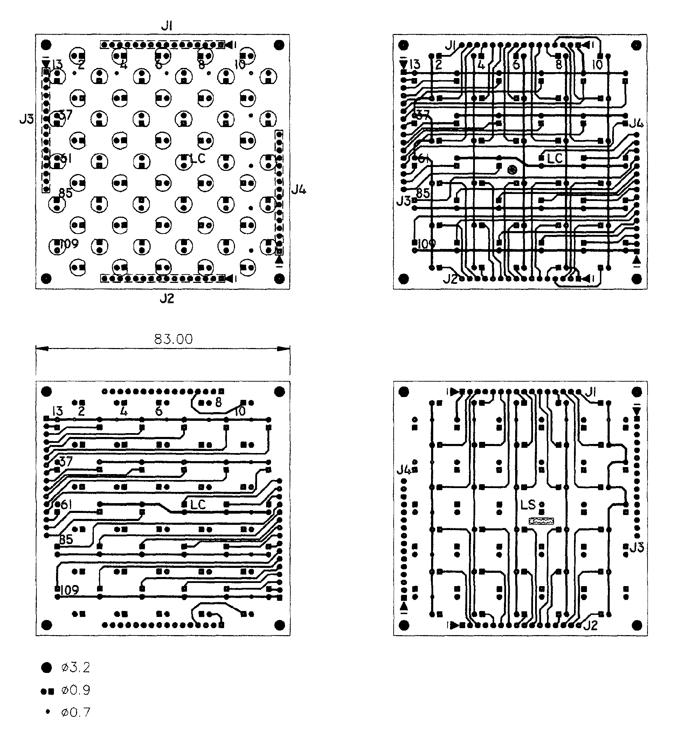

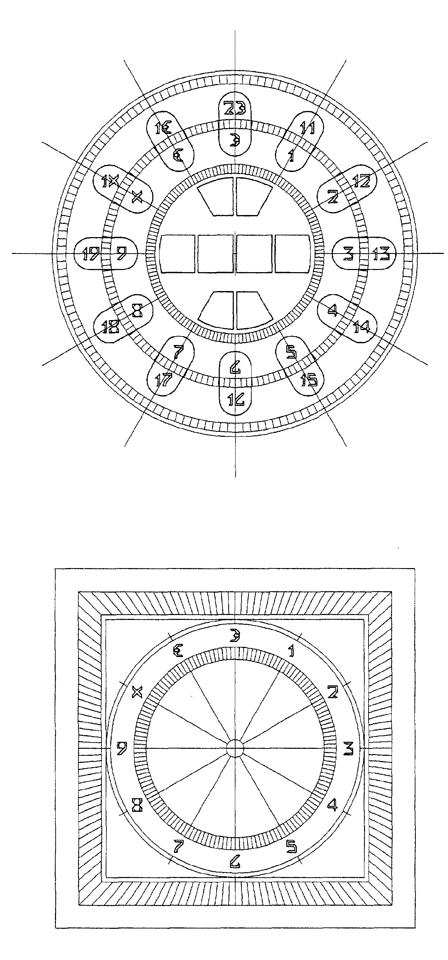

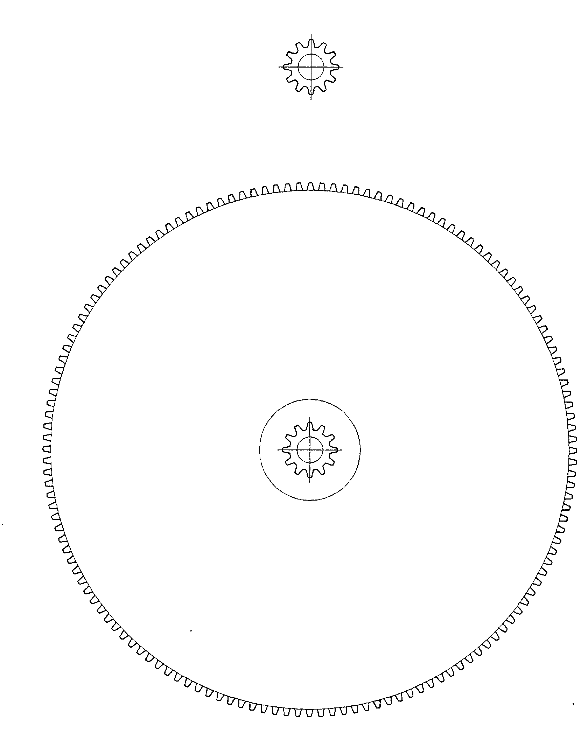

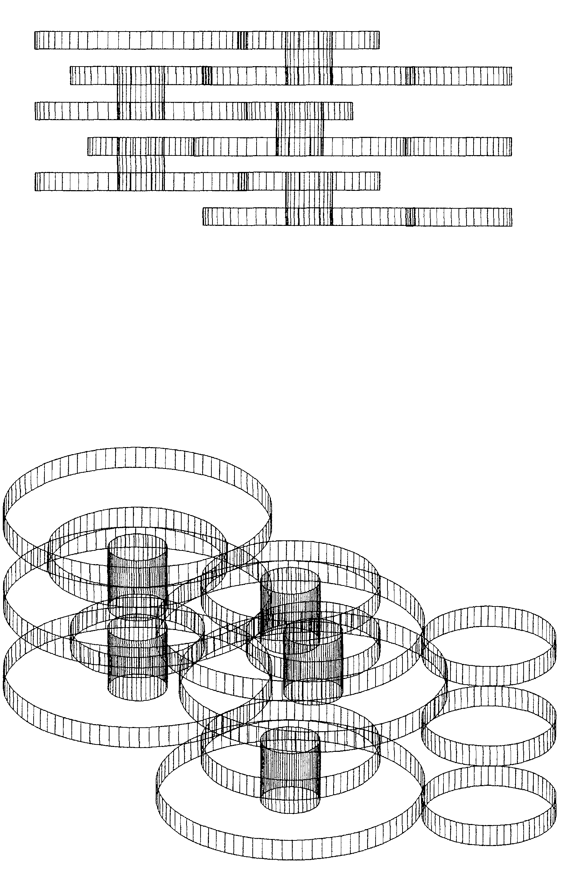

The definitive number assigned in the actual quantitative relationship with Point V, is a positive one. That number, however, always leads back to number 1. For this reason Point V as a number 1 and. as a figure 1, has a size which is always worth 1. In effect, aside from the estimated relationship determined in figures which will depend upon the chosen unit of measurement, the main value can be determined, and can lead back to the integer 1. That ONE of which there are precise references to the integer 1 already corresponding to the... INTEGER 1 and the implied POSITIVE.

POINT >·< = Original Point *vu:* Entity whose densitiy and appearance refers to the above referend Point >·< IN EQUILIBRIUM. AS WELL AS WITH THE WELL EXPRESSED MINUS SIGN REFERRING TO THE SUBTHERMAL*NEGATIVE VALUE, REPRESENTED AS A - MINUS SIGN AND PUT BEFORE THE APPROPRIATE NUMBER *-1 !For this, despite << IT >·< >> being a subthermic potential not yet scientifically defined; the numerical value which applies here to the ORIGINAL >·< POINT, is always provided by a number with the minus sign, - IsNEGATIVE. In fact an Original Point >·< expressed as - 1 corresponds to a Point 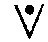 expressed in positive.

### DOZENAL NUMERATION SYSTEM: THE MECHANISM AND CALCULATION FOR PROGRESSIVELY NUMBERING (TABLE N° 17 )

### DOZENAL NUMERATION SYSTEM: D E S C R I P T I O N.

This is a project and realisation of a MATHEMATICAL SYSTEM FOUNDED on the use of new specific symbols, defined in an associated scheme.

THE INVENTION CAN BE APPLIED IN ALL FIELDS AND ALL OPERATIONAL SECTORS. It can be demonstrated taking into account the three principal dimensions, namely length, width and depth, of any physical body or potential entity. First of all it must be established that these symbols or graphics, which can be easily recognised, have received from the Author an absolute irrefutable numerical value. In turn the HISTORICAL and CULTURAL aspect as well as the role that any dictionary plays with regard to its particular language: the GREEK and LATIN; ITALIAN, ENGLISH, FRENCH, SWEDISH, RUSSIAN, HINDI, ARABIC, CHINESE, JAPANESE, SPANISH, etc. must be taken into account. Later, when actually designing these symbols or figures and naming them, it becomes possible to see their relationship to geometrical figures, including the angle of 360°; the round angle which corresponds to the NEW ROUND ANGLE, formed of pìnk degres, equal to 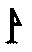 °' prime/degrees. Note: The round angle formed of 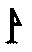 ° 0 prime/degrees, equal to 1· 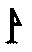 °' of prime/degrees set in a circle on the same goniometer enters, into a parallel RELATIONSHIP with the angle of 360°... This comes about automatically when a straight-line segment, already graded into one hundred forty-four lines, is equal to 144 LINES as is the model foot, when formed into a circle. Thus the same measured foot which is already divided into PÌNK-LINES, also contains the 144 lines and in turn is equal to minutes of an hour as well as to 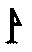 °' degrees = pìnk geometrical degrees. At this point functional application is widely possible, in any sense and any operational sector, starting from the production of standardised mechanisms for Apparata and computers which can provide the relevant data of the main three incommensurable dimensions which are...SPACE*TIME and GEOMETRY. For this reason, the graphic symbols and the system itself are designed for use in composition, and as representative specific figures in designs and plans for instruments, operational plans and personal computers. This works as well for the evaluation and measurement of physical entities, and potentialities.

They can be used in writing, for decorative use as well as for posters and placards, for advertising and for architecture, including building material for paving, walls, vaults and spires.

These signs or symbols, which are also numbers, can be used with good effect in art objects such as jewellery is clothes, shoes, hats, and even playing cards. As far as the technology involved with the new digitalized, terrestial and universal communication system, the mathematical system here presented can be used in many cost-saving ways. Meanwhile, with regard to the technology relative to digitalization in the new system of universal terrestrial comunication, the mathematical system here in laid out is seen to often many advantages, as well as having many extremely highly qualified references. For thus reason we must go for development with a techno-didactic approach to Its function in Public Utilities, scientific research and for work. Self is control is inherent in cultural as in artistic, Publicity Industrial and Commercial Commitments. It is possible to construct set-squares, rulers and straightedges as well as goniometers using the appropriate definitive calibrations applicable to the units of measurement and the specific graphic symbols designed for this mathematical system and in conformity with either method of measurement, both officially adopted or unofficially selected.

This system of numbering can also be applied to operational sectors concerned with goniometrical functions and the 360° round angle. It is considered appropriate and necessary that a new goniometer is implemented with comparative calibrations based on the...

ROUND ANGLE of 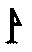 °' prime/degrees herein proposed by |/°'.

### DOZENAL NUMERATION SYSTEM: DIVERSITY AND ADVANTAGES.

### TAKING INTO ACCOUNT THE PRESENT STATE OF TECHNOLOGY, IT IS POSSIBLE TO APPLY THE PRESENT INVENTION IN EVERY FIELD.

This system of numeration is intended for application to all operational sectors and includes everything related to a goniometrical function of measurement of angles including the round, 360° angle. Indeed this leads of necessity to the development of the new Pìnkerle goniometer « PROTRACTOR » and the standard gauge, both of which are constructed on the basis of theNEW ROUND ANGLE of 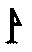 °' prime/degrees.

THESE PRIME*PÌNK*DEGREES which are followed by *Second/Degrees, Third/Degrees and so on, are here reproposed as prime/minutes; second/minutes* and third/minutes, followed by the sequential divisions of each succeeding hour. That is to say: Each circle constitutes a model of the foot divided into pìnk lines which... Automatically correspond, to the GEOMETRICAL value of pìnk°' degrees. Similarly, other circles, calibrated in other units of measurement and subdivided into PÌNK/PARTS divisions, also conform. This means that further circles measured with greater or lesser values in each sector of the chosen unit of measurement contribute to the configuration of a goniometer « protractor » which is already in a relationship with the Pìnk°' prime degrees angle under consideration. As a result, obviously, everything which has an established relationship with the unit of measurement, may be justifiably interposed with the differing values of differently calibrated circles. In this way it is the unit of measurement which determines the amplitude of each Pìnk° degree. Whether in negative or in positive, THE PìNK°' PRIME/DEGREES ANGLE = 1· 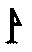 °' prime degrees is always in a relationship of one, three, five, seven or déz times the unit of reference. In Geometry THE NEW ORIGINAL GONIO-FOOT becomes, not so much a unit but more a tool of measurement to be employed not only for straightforward drawings, but, with the standard accessories and equipment, it can be used in the preparation of plans, blueprints and tables for technical drawings. Since the units of measurement are always in syntony, all this can be used as required, in the exercise of a profession, in industrial production, for a hobby even, but above all for research.

Projections can be achieved: from prime degrees, to second degrees, third degrees and so on. The numerical mathematical scheme, here set out is, for as long as it remains in use, built upon the unit of measurement called a foot, particularly when it is subdivided into its traditional twelve inches, the equivalent of déz inches; or further subdivided into one hundred and forty four lines, in turn equal in value to Pìnk lines = 1· 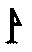 lines.

In this manner, a multiple of the foot, the yard is revalued, made up as it is, of three feet. Indeed this Yard can be included in the scheme, as a measure of distance as in YARD*MILES; in a specific reference to the decimal quantity... 1,728 Yards assigned the value of déz pìnk yards = 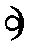 · 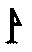 yards drawn from the dozenal system here being presented. Having broached the subject of Yards, we can now procede to the quantification of successive Yards, such as One mile/pìnk = 1 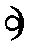 · 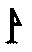 yards or 3 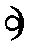 · 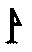 feet using the same cardinal numbers. 1· 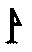 0· 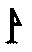 0.00 = Pìnkpìnks yards; and then 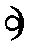 · 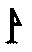 0· 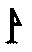 0.00 = déz Pìnkpìnks yards. Of course the yard is a separate measure from the foot, but one which, by dividing or multiplying by three, can be requalified as a foot measurement. Inches, the other unit of measurement, can be arrived at by dividing each foot by 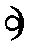 inches, or each yard which is composed and divided by 36 inches, corresponds to 3 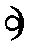 inches, which in turn equal threz inches.

The established fact of the division of the solar day into twenty four consecutive hours was the determining factor in the subdivision of the terrestrial globe into the same number of time zones, each equidistant and limited by successive meridians spaced 15° apart: an amplitude of 15° of the 360° degrees at each parallel.

Numbers are assigned progressively to each meridian corresponding to the relative difference with the Greenwich meridian, the twenty-fourth time zone being that of Greenwich. It is for the very reason that the meridian which effects Zero Hour starts from the North Pole crosses a precise point on the GREENWICH MERIDIAN, then crosses the Parallels, the Equator, the Southern Parallels until it arrives at the South Pole, offering a reference line for the successive lines of longitude 15° West or East of the Greenwich one.

As you see, meridians succeed each other, every 15° degrees, establishing the borders of the twenty four Time Zones.

Since the dials of watches are divided into twelve hours, usually numbered from 1 to 12, and arranged in a circle some people get into the habit of giving the correct time in the morning, but less correctly in the afternoon, by not using the twenty four hour clock. This is one of the reasons why individuals and an exacting public, have been known to suffer more than inconvenience from a lack of precision, particularly as far as telecommunications are concerned. Now having established that the Pìnkerle Clock conforms with the dozenal numbering, the clockface can be recalibrated to show twez hours for each day, and thus all the twenty four hours of a complete day. The above said Pìnkerle Clock shows on its dial each of the 24 consecutive hours, that is the whole day of Twez hours. The user, and indeed the Public as a whole will, if relating to a clock, so calibrated, begin gradually to use it more and more correctly not only within their own time zones, but in regard to all other zones which may come up in the course of business or conversation.
1 Time zones become a reality on the Pìnkerle Clock because to each time zone is given the explicating sequence of déz pìnk degrees 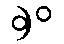 for both phases, positive and negative of the basic numbering. The latter is connected with any rotation the Earth makes around its axis, for all the twez hours = 2 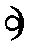 hours, as established for 24 hours. Any moment of passing time can be visualized for hour and minute in every day.
2 The Pìnkerle clock shows, at a glance the difference between the hours before and after noon At the same time it precisely displays each prime/minute, each minute/second, each minute/third and so on.
3 Furthermore it helps in the establishment of points of reference, appreciably improving an individual' s capacity to fix his own and others' exact positions in relation to the Greenwich Meridian. All this is as foreseen, since the Pìnkerle*Clock has, within its standard mechanism a development of the Original Pìnkometer, which is also activated by the constant, fixed emission of a selected quartz crystal and by the relative integrated Ω.

So far, so good. In view of what has been written above, the application of the dozenal system of numeration can constitute an ORIGINAL PÌNKOMETER, making use of the foot there represented.

This brings with it the awareness that the number of inches which make a foot are directly related to the basic numerals, and then that the division of each inch into twelve lines leads to the recognition of one hundred and forty four lines, coinciding with pìnk*lines, already prearranged in the foot. Lines already comparable and affirmed to be in conformity with exactly 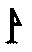 1° degrees of GONIO*FOOT already put in relationship with the already mentioned foot pìnk lines. That means that one hundred forty four lines are equal to 1· 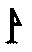 /foot lines distributed throughout the entire foot. Now this offers the-advantage of being able to produce rulers, straightedges and set squares of varying dimensions and shapes, all in a direct relationship with the foot, as with the yard in its division. This, in turn, establishes incontrovertably that joining up a foot into a circle, you are faced with a protractor made up of 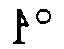 degrees. This comes about because it is possible to define a true circle graded with the same number of lines as degrees, ascribe them to Geometry and realise the ORIGINAL GONIO/FOOT.

At the same time the same lines of the foot forming the relative degrees of the goniometer circle are used in the PÌNKERLE CLOCK with the function of minutes. Thus the same numbering applied to the foot in a straight line realizes the CALIBRE gauge, the GONIO/FOOT, the protractor and the PÌNKERLE CLOCK. All this grants the very real possibility to be able to design a new CHRONOMETER which would show not only PRIME/MINUTES and minute/seconds but also every other succeeding portion of a minute, the minute\third, the minute\fourth, fifth, sixth, and so on, exactly as described better above and as will be later specified below. Other numberless advantages accrue from the transmission of data. Then thanks to the use of the Original PÌNKOMETER also in the definition of weights and volumes. The Original Pìnkometer with its connection to GONIO/FOOT/LINES, is for immediate use, as a point of reference for innovation.

Since this is a standard mechanism principally designed for the construction of operational instruments: clocks, chronometers, compasses for orientation and navigation, it becomes essential for the definition of volumes, specific gravity and for realising new industrial machinery, for the inertial guidance systems in avionics; as indeed for all other applications both practical and related to calculation, to measurement, to programming and, of course, in the development of operational programmes for the conduct of all professions.

The author Pietro DEZI, whose pen-name is Pietro Camillo de Riggè, claims the authorship and the property right of what is here represented; the essence of which has been already exposed by the publication of the book COGNOMETRIA. The latter has been patented in ITALY, on July 28, 1999, by the Italian Patent and Cultural Activities Promotion Office, where it is registered with number 3 7 9 6 3 4; protocol N° 3 2 3 4. It must be also established that Pietro DEZI discoverd, singled out, INVENTED and created specifical graphical Signs which are representative SYMBOLS, having a reference value and an absolute numerical value, given by the same author. The invention is therefore here represented. The Invention can be applied in all fields as described, because the above mentioned symbols, endowed with unmistakable ideographical characteristics, have been integrated in a << DOZENAL >> numerical order and can be inserted in a functional scheme, also created by the author. A precise mathematical system, aimed at calculating and EXACTLY determining the real value of any existing << DIMENSION >> has been created, giving at the same time the explanatory figures and the useful data to make relevant comparisons through the TRIDIONIC EQUATION. for geometrical evaluations and measurement of weights and volumes as well. Therefore this mathematical system and enclosed detailed documents are presented to the examination of proper authorities for the granting of a Patent for Industial Invention and Public Utility Specimen: in conformity with the terms of the priority right and with reference to the publication of the book COGNOMETRIA.
Drawing n° 1/17 DOZENAL NUMERATION SYSTEM:
   FIGURES REPRESENTING THE NEW SYMBOLS with unmistakable characteristics, having a specifical reference including the absolute numerical value ascribed by the author. The new invented symbols have also a reference with a vocal and cultural principle and being integrative DOZENAL NUMBERS form the dozen numbering. Therefore, besides forming the scheme they are in function with the above said PRECISE MATHEMATICAL SYSTEM.
Drawing n° 2/17 DOZENAL NUMERATION SYSTEM:
   DOUBLE SQUARING ON A SHEET OF PAPER SHOWING the rigorousness of the dimensions of the squares delimited on the basis of the meter in connection with both the decimal numbering and the DOZENAL numbering.
   The squares are the expression of the real value originating from the same meter to which both the decimal numbering and the DOZENAL numbering have been applied. They will be used to form the new multiplication tables. The value of the same measuring unit in connection with the decimal numbering didn't allow to define 1/3 of FINISHED METER, while the dozenal numbering here represented always allows to define 1/3 of finished meter and to cast out the nines on a square.
Drawing n° 3/17 DOZENAL NUMERATION SYSTEM:
   THE MEASUREMENT UNIT CALLED FOOT, containing the dozenal basis numbering, corresponding to each inch and the synthetical transcription of reference figures corresponding to relating lines.
Drawing n° 4/17 DOZENAL NUMERATION SYSTEM:
   TRACT OF THE MEASUREMENT UNIT called meter equal to ¼ of a meter = twenty-five centimeters and TREZ pìnkerlimeters.
   With the double representation of decimeters, centimeters and the proposed disposition of DEZIMETERS and relevant pìnkerlimeters etc. anybody can see the advantages offered by the divisibility of n° one << 1 >> in 3; 6; and 9 exactly defined parts.
Drawing n° 5/17 DOZENAL NUMERATION SYSTEM:
   DIVISION OF A STRAIGHT line segment in connection with the foot and formation of th relevant geometrical figures: relative triangles to shape the different practical solutions.
Drawing n° 6/17 DOZENAL NUMERATION SYSTEM:
   DIVISION OF A STRAIGHT line segment in connection with the foot and formation of the relevant geometrical figures: Quadrangles and squares for clocks and other practical applications.
Drawing n° 7/17 DOZENAL NUMERATION SYSTEM:
   THE GEA PÌNKERLE CLOCK SHOWS, at a glance the difference between the hours before and after noon At the same time it precisely displays each prime/minute, each minute/second, each minute/third and so on.
Drawing n° 8/17 DOZENAL NUMERATION SYSTEM:
   MODEL OF STANDARD COMPASS 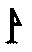 . Graded circle formed by joining a straight line segment to which the dozenal numbering has been applied in function of geometry.
   The goniometric representation is in conformity with the distribution of the number of angles mathematically determined by 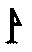 °' = |/°' = prime pìnk degrees and by 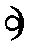 · 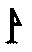 °" = |/°" = second déz pìnk degrees°: they can be proposed in connection with the Gonio-foot in geometry, with commensurable widths. Model of Standard 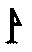 COMPASS for orientation and navigation arranged to be connected to sensors and computers already qualified for monitoring the horizon, in navigation and in flight.
Drawing n° 9/17 DOZENAL NUMERATION SYSTEM:
   GRADED CIRCLE WITH SECTOR PROJECTIONS FOR THE SUCCESSIVE |/°" to which the dozenal numbering is applied in connection with geometry to determine the succession of minutes and degrees°"' as well as of successive minutes and degrees°"" etc.
   The graduation representation conforms the really defined value with the width of any sector relating the correct distribution: Sheet Number 53/54 in the same way as it results in the number of angles, degrees and min' mathematically determined in 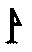 °' = |/°= pìnk degrees°' !
Drawing n° 10/17 DOZENAL NUMERATION SYSTEM:
   The final caliber connected with the foot with the double division in inches and the classical division of inches in ½; ¼, and 1/8 etc. And then, more precisely with the division in pìnk-lines to which the dozenal numbering has been applied also in the comparator.
Drawing n° 11/17 DOZENAL NUMERATION SYSTEM:
   The electronic final caliber connected with the foot and with the sample meter = foot and meter, and with multi-divisions in inches, in lines, minilines etc. as well in dezimeters, pìnkerlimeters minipínklimeters with the relevant successive divisions. Including the classical division of inches in ½, ¼, 1/8 etc. According to the dozenal numbering, the final caliber is fitted with devices called indicators by 5, by 7, and by 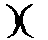 divisions concerning the whole inch. While for the division of each inch in eleven parts = 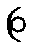 parts, the above-said device is called HENDECATOR. = hendecadozenal division from the hendecasyllable, *idem hendecasyllabic.*
Drawing n° 12/17 DOZENAL NUMERATION SYSTEM:
   Toponom of geometry: Demonstration of the spontaneous geometrical conformity of each rectangle triangle referred to the consecutive numbers 3, 4 and 5, both in the positive and in the negative. This can be proved with any measurement unit to which the dozenal numbering has been applied.
Drawing n° 13/17 DOZENAL NUMERATION SYSTEM:
   STANDARD keyboard for computers in general; for Innovatory Telephone Apparata; integrative in writing programmes for Personal Computers working also with the dozenal numbering and PÌNKERLE symbols.
Drawing n° 14/17 DOZENAL NUMERATION SYSTEM:
   Principle scheme concerning the above-said Standard Pìnkometer Prototype; this apparatus is the primary component of the GEA PÌNKERLE CLOCK. It is, at the same time the primary support of all processes in technological innovation being an important integrator of the new technology, also for personal computers. It is, by antonomasia, the mechanism innovating common and specifical instruments of Public Utility and work.
Drawing n° 15/17 DOZENAL NUMERATION SYSTEM.
   QUADRANTS ARRANGED FOR CLOCKS and for measurement and survey of potential values pertaining SPACE, TIME and GEOMETRY. The two models can be applied also to manifestations connected with the potentiality contents termically observed and controlled: starting from zero absolute and beyond subtermal value.
Drawing n° 16/17 DOZENAL NUMERATION SYSTEM:
   The standard device derived from the above-described Standard Pìnkometer Prototype is a primary component for the new universal drafting devices 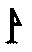 .
   The new Pìnkerle universal drafting device utilizes the device and the new P. C. technology. On said personal computers all useful sectors, also for drawing in connection, can be viewed. On levels, thanks to the new tecnology of Personal Computers, one can work, through a ruler, in all sectors with any given width.
Drawing n° 17/17 DOZENAL NUMERATION SYSTEM.
   THE MULTIPLYING AND REDUCTION MECHANICAL GROUP for direct or indirect transmissions:
   Ratio 1 multiplied twelve = One multiplied 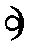 ; and one divided déz.

The Patent should include also the writing programmes UTILIZING the above-said symbols, according to the copyright by Pietro Dezi, dated July 1999.

Using the above-mentioned mathematical system it is possible to establish that Space-Time and Geometry are always in syntony and dozenal numbering can be << SYSTEMATICALLY >> applied all measurement units, starting from the original unit called foot, which can be used in any activity. Since each foot contains twelve inches and each inch contains twelve lines or tracts we can say that, by applying the dozenal numbering, the conformity of measurement units is determined << JUST >> in the basic numbering represented.

Therefore the connection of the succession of déz inches = 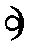 inches as well of pìnk lines or tracts = 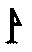 lines of each foot are conformable and enable us to operate in any field through a new and very advantageous technological process. If we join the same foot in the form of a circle we simultaneously see apparent the same dozenal numbering already applied in Geometry. Thus, having created a Gonio foot, we make a compass for bearing and navigation and also the Gea Pìnkerle CLOCK. Therefore, after this premise and representation, the afore-said Dezi Pietro claims the right and the priority connected with the practical application of writing programmes and printing machines; including reckoning apparata for Personal.Computers using the symbols of the afore-said dozenal numbering, determining the Precise Mathematical System connected with Industrial production and with the relevant commercialization.

In detail:

## Claims

1. It is claimed the authorship of the APPLICATION OF THE DOZENAL NUMBERING to initiate and develop the techniques in all processes pertaining to the mathematical system, apart from the technological innovation, concerning industrial production, advertising and subsequent commercialization.

2. It is claimed the authorship of the Standard Pìnkometer Prototype, through which the function of operational instruments is assembled, activated and determined, with all that pertains and leaves out of consideration the Prototype Pìnkometer which may be a mechanical, electromechanical, electronical or digital construction.

3. It is claimed the authorship of the operational Pìnkometer Prototype, with or without devices, to be applied to measurement instruments of potential values, such as clocks in general: including all board, laboratory and portable instruments pertaining to dynametry, relative and effective speed measuring and in APPLIED MECHANICAL ENGINEERING. As well in ELECTRONICS apart from the symbols and the use of the dozenal numbering. The same is true for what attains to the quadrants which indicate values: clocks and instruments used in reading, for communications and data transmission.
The Standard Pìnkometer Prototypes, with or withut devices,can be also used in instruments and apparata arranged for surface and depth navigation, as well as for alternative telephony as confronted with the one already in use, based on the decimal numbering, with or without the alphabet letters, for scientifical purposes. The same is true for piloted flight, for self-piloted or vectored programmed flight ; and for the control of means kinetically endowed with inertial drive programmes integrally assembled and with devices derived from the Standard Pìnkometer Prototype.

4. It is claimed the authorship of the representation of numbers and symbols, with the drawings of objects; of instruments; of devices and of sample accessories useful for learning the Precise Mathematical System, already operating for didactical purposes.

5. It is claimed the authorship of what printed in the following drawings, pertaining what above said.
